# DEMANDE DE BREVET EUROPEEN

(11) **EP 1 277 617 A2**
(43) Date de publication de la demande: **22.01.2003**
(21) Numéro de dépôt: 02360211.3
(22) Date de dépôt: 15.07.2002
(51) Int. Cl.: B60R 1/06

(54) **Dispositif de fixation d'un rétroviseur extérieur sur un véhicule automobile**

(30) Priorité: 16.07.2001 FR 0109489
(71) Demandeur: Ficomirrors France SAS, 57260 Dieuze (FR)
(72) Inventeur: Valade, Christophe, 54760 Arraye (FR)
(74) Mandataire: Nuss, Pierre

(57) **Abrégé**

La présente invention concerne un dispositif de fixation d'un rétroviseur extérieur, constitué par un boîtier (1) et par un cache-embase (2), sur un véhicule automobile.

Dispositif caractérisé en ce qu'il se présente essentiellement sous forme d'un support (5) de boîtier de rétroviseur solidarisé avec ou intégré dans la matière formant une portière ou un élément de carrosserie d'un véhicule automobile et d'un moyen (6) de montage pivotant du boîtier (1) sur ledit support (5).

L'invention est plus particulièrement applicable dans le domaine des véhicules automobiles, en particulier de leurs accessoires, et notamment leurs rétroviseurs extérieurs.

## Description

La présente invention concerne le domaine des véhicules automobiles, en particulier de leurs accessoires, et notamment leurs rétroviseurs extérieurs, et a pour objet un dispositif de fixation d'un rétroviseur extérieur sur un véhicule automobile.

Les véhicules automobiles sont généralement équipés de deux rétroviseurs extérieurs fixés chacun sur une portière avant ou sur un élément de carrosserie, au moyen d'une embase pourvue d'un cache embase.

Un tel montage est satisfaisant quant à la solution technique proposée et permet tous les types d'installations de rétroviseurs.

Cependant, la fixation de telles embases nécessite généralement des moyens d'intervention relativement importants pour le positionnement et le blocage de l'embase ainsi que des temps d'intervention relativement importants, ce qui obère d'autant le prix de revient des rétroviseurs existants.

En outre, les embases, qui sont généralement réalisées en matière synthétique ou en métal, présentent l'inconvénient d'une résistance aux chocs relativement faibles et donc d'un arrachage relativement facile en cas de choc.

Pour obvier à cet inconvénient, il est nécessaire de réaliser des embases relativement complexes présentant un nombre de points d'accrochage et de fixation relativement élevés pour obtenir une résistance à l'arrachage élevée, de sorte que la constitution même de ces embases est assez coûteuse.

On connaît ainsi, par EP-A-0 807 551, un rétroviseur extérieur présentant une embase de fixation sur un panneau de portière ou un élément de carrosserie, cette embase étant munie de moyens d'assemblage à baïonnette.

Ce rétroviseur permet, certes, une bonne application de l'embase et du cache-embase sur le panneau de portière ou l'élément de carrosserie, mais nécessite, pour sa fixation, la mise en oeuvre d'un nombre important de moyens de fixation.

La présente invention a pour but de pallier les inconvénients des dispositifs de montage de rétroviseurs extérieurs connus en proposant un dispositif de fixation d'un rétroviseur extérieur sur un véhicule automobile, permettant un montage et un démontage très rapides et très simples du rétroviseur et la suppression de l'embase habituelle.

A cet effet, le dispositif de fixation d'un rétroviseur extérieur sur un véhicule automobile est caractérisé en ce qu'il se présente essentiellement sous forme d'un support de boîtier de rétroviseur solidarisé avec ou intégré dans la matière formant une portière ou un élément de carosserie d'un véhicule automobile et d'un moyen de montage pivotant du boîtier sur ledit support.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue partielle en élévation et en coupe d'un montage de boîtier de rétroviseur par l'intermédiaire d'un dispositif conforme à l'invention, en position de service ;
la figure 2 est une vue en perspective du dispositif seul ;
la figure 3 est une vue en perspective représentant l'assemblage du dispositif et du moyen de montage pivotant du boîtier ;
les figures 4a à 4e sont des représentations schématiques expliquant l'assemblage du moyen de montage du boîtier et du dispositif, et
la figure 5 est une vue analogue à celle de la figure 1, représentant une variante de réalisation de l'invention.

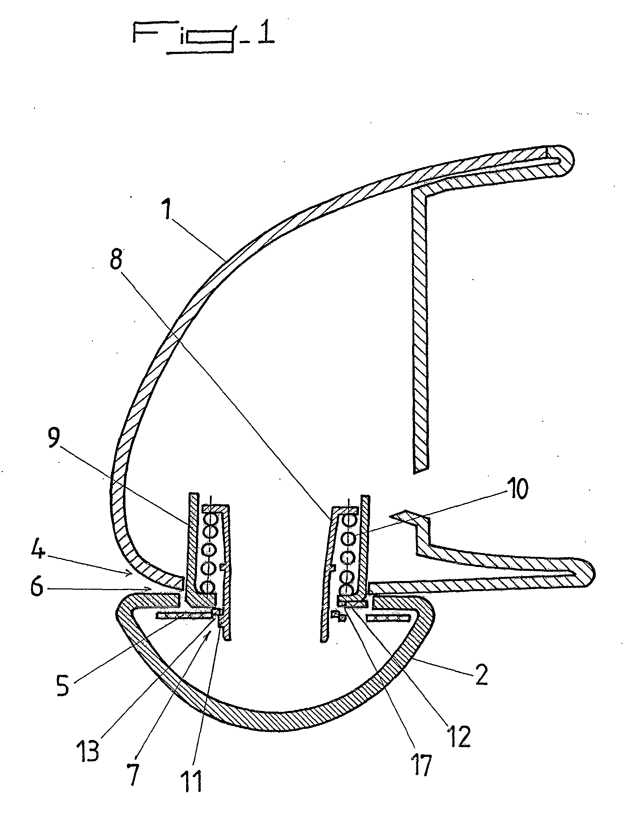

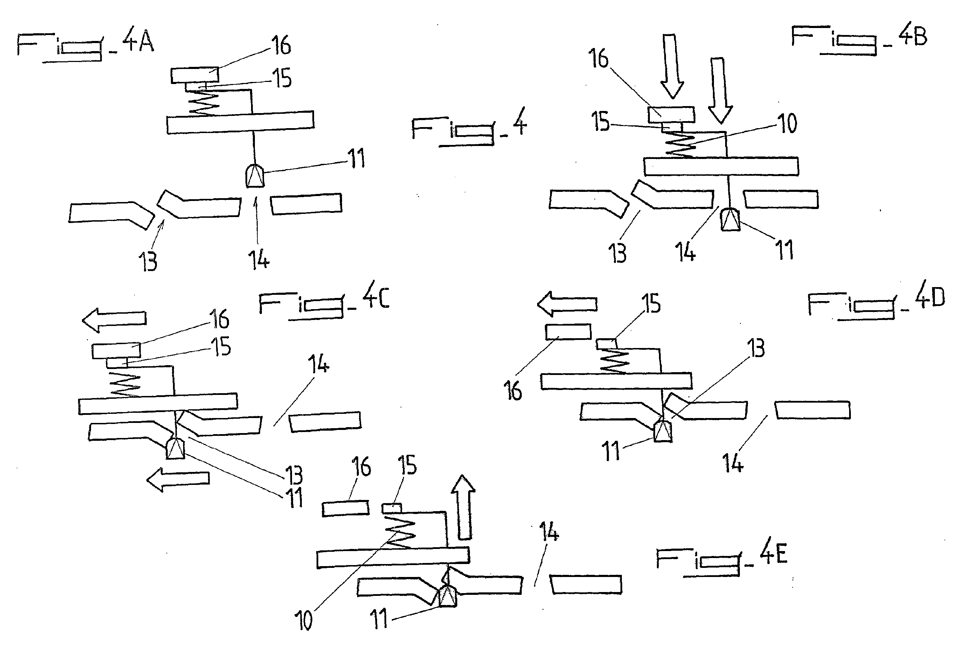

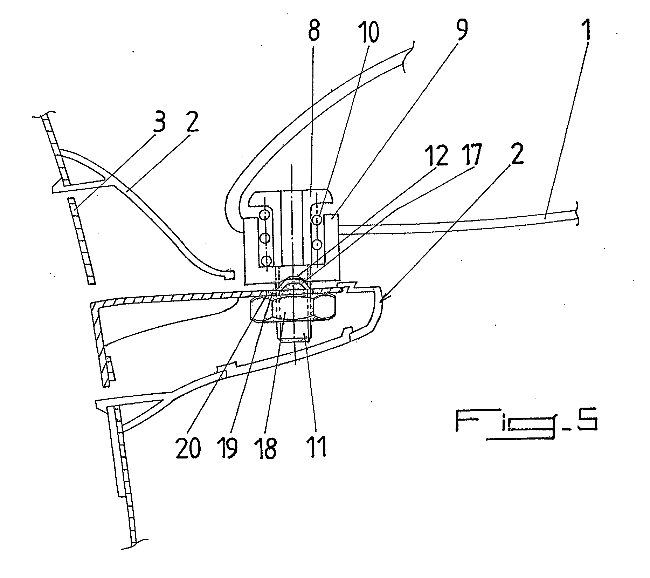

Les figures 1 et 5 des dessins annexés représentent un rétroviseur extérieur, essentiellement constitué par un boîtier 1 et par un cache-embase 2 et monté sur un élément de carrosserie ou sur une portière 3 par l'intermédiaire d'un dispositif de fixation 4.

Conformément à l'invention et comme le montre plus particulièrement, à titre d'exemple, la figure 1 des dessins annexés, le dispositif 4 de fixation d'un rétroviseur extérieur sur un véhicule automobile se présente essentiellement sous forme d'un support 5 de boîtier de rétroviseur solidarisé avec ou intégré dans la matière formant une portière 3 ou un élément de carosserie d'un véhicule automobile et d'un moyen 6 de montage pivotant du boîtier 1 sur ledit support 5.

Ainsi, le support 5 qui peut être réalisé sous forme d'une pièce indépendante rapportée par soudage ou par collage ou sous forme d'une partie constitutive d'un panneau de portière ou d'un élément de carrosserie forme simultanément l'embase de fixation d'un rétroviseur sur une portière ou un élément de carrosserie.

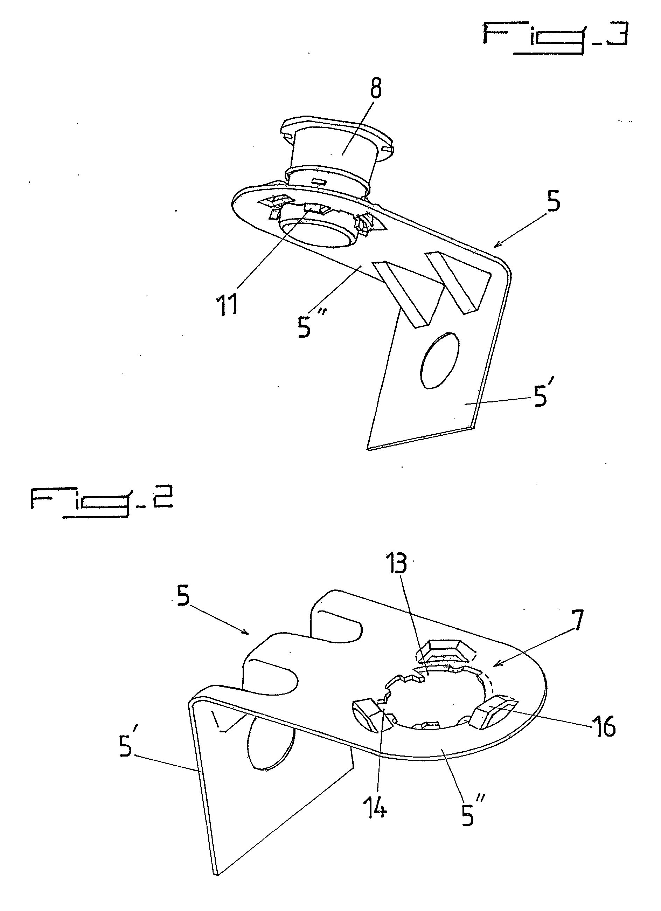

Le support 5 de boîtier de rétroviseur, qui est solidarisé avec ou intégré dans une portière 3 ou un élément de carosserie d'un véhicule automobile, est avantageusement constitué sous forme d'une tôle emboutie en équerre (figure 2), dont une aile 5' sert à la fixation sur une portière 3 ou un élément de carosserie et dont l'autre aile 5" est munie d'un moyen 7 de réception, de maintien et de positionnement du moyen 6 de montage pivotant du boîtier 1 sur le support 5.

La fixation de ce support 5 sur la portière ou l'élément de carrosserie peut être réalisé par collage ou par soudage.

En outre, selon une variante de réalisation de l'invention, le support 5 de boîtier de rétroviseur peut également être réalisé en une matière synthétique rigide et être collé dans un panneau de portière ou sur un élément de carrosserie métallique ou encore être collé ou soudé sur un panneau de portière ou un élément de carrosserie également en matière synthétique.

Il est également possible, conformément à une autre variante de réalisation de l'invention, non représentée aux dessins annexés, de réaliser le support 5 d'une seule pièce avec le panneau de portière ou l'élément de carrosserie.

Enfin, selon une autre caractéristique de l'invention, non représentée aux dessins annexés, le support 5 peut aussi être recouvert par une partie du panneau de portière ou de l'élément de carrosserie formant cache-embase et le jeu fonctionnel entre le boîtier et le cache-embase peut alors être comblé par un élément intermédiaire de jointoiement, du type rondelle souple en élastomère, ou analogue. Un tel élément intermédiaire de jointoiement permet de limiter les entrées d'air dynamiques et les bruits associés, tout en assurant l'étanchéité.

Le moyen 6 de montage pivotant du boîtier 1 sur le support 5 est avantageusement constitué par un tourillon 8 d'accrochage et de maintien du boîtier 1 sur le support 5 par coopération avec le moyen 7 de réception, de maintien et de positionnement prévu sur le support 5, par un dispositif 11 de maintien du boîtier 1 sur le support 5 et par un dispositif 12 d'indexation en position du boîtier 1 sur le support 5, le tourillon 8 étant guidé axialement dans une platine 9 ou un élément de structure du boîtier 1 et chargé par un ressort de compression 10 s'appuyant contre un épaulement intérieur 9' de la platine 9 et contre un épaulement 8' du tourillon 8 (figures 1 à 5).

Conformément à un premier mode de réalisation de l'invention, et comme le montrent les figures 1 à 4 des dessins annexés, le dispositif 11 de maintien du boîtier 1 sur le support 5 est constitué par un ergot en saillie sur la périphérie de la partie du tourillon 8 opposée à l'épaulement 8' de ce dernier et coopérant avec un logement de blocage 13 formant le moyen 7 de réception, de maintien et de positionnement prévu sur le support 5, ce moyen 7 comportant, en outre, au moins une ouverture 14 de passage de l'ergot formant le dispositif de maintien 11.

Ainsi, comme le montrent les figures 4a à 4e des dessins annexés, le montage du boîtier 1 sur le support 5 est réalisé en présentant le dispositif de maintien 11 du moyen 6 de montage pivotant du boîtier 1 sur le support 5 en face de l'ouverture 14 du moyen 7 de réception, de maintien et de positionnement prévu sur le support 5 (figure 4a), puis en insérant l'ergot formant ledit moyen 11 dans ladite ouverture 14 par action d'une poussée sur le tourillon 8 contre l'action du ressort de compression 10 (figure 4b). L'ensemble tourillon 8 et platine 9 ou élément de structure du boîtier 1 est alors déplacé en rotation autour de l'axe du tourillon 8, de sorte que l'ergot formant le moyen 11 est amené sous la face inférieure du support 5 jusqu'à entrer en contact avec le logement de blocage 13 formant le moyen 7 de réception, de maintien et de positionnement prévu sur le support 5(figures 4c et 4d). La pression sur l'ensemble tourillon 8 et platine 9 ou élément de structure du boîtier 1 est alors relâchée, de sorte que l'ergot 11 reste bloqué en position dans ledit logement 13(figure 4e).

Selon une autre caractéristique de l'invention, et comme le montrent les figures 4a à 4e des dessins annexés, le tourillon 8 peut avantageusement être pourvu d'un élément complémentaire 15 de précontrainte du ressort de compression 10 et de présentation de l'ensemble tourillon 8 et platine 9 ou élément de structure du boîtier 1 en position d'engagement sur le support 5, cet élément complémentaire 15 étant sous forme d'une dent ou analogue coopérant avec un arrêt 16 prévu sur la platine 9 ou la structure du boîtier 1. Ainsi, comme le montrent les figures 4a à 4c, le tourillon est maintenu dans une position, dans laquelle il est prêt à être inséré dans l'ouverture 14 du support 5, le déplacement de la platine 9 ou élément de structure du boîtier 1, après arrivée de l'ergot dans le logement 13, ayant pour effet de provoquer le déclenchement de l'élément complémentaire 15 et le retour en position de service du tourillon 8 sous l'action du ressort de compression 10 (figures 4d et 4e). Une telle mise en précontrainte de l'ensemble permet un prémontage de ces pièces et leur livraison sous cette forme, de sorte que l'assemblage définitif sur le support 5 peut être réalisé rapidement et très simplement et donc à moindre frais. L'habillage proprement dit du rétroviseur, pourra être mis en place, préalablement ou ultérieurement, par de simples opérations de clippage.

Le dispositif 12 d'indexation en position du boîtier 1 sur le support 5 se présente, de préférence, sous forme d'une série de crans en saillie sur la platine 9 ou élément de structure du boîtier 1, s'étendant à intervalles réguliers autour de la base du tourillon 8 et coopérant avec des crans correspondants 17 prévus sur le support 5. Ainsi, après la fixation de l'ensemble sur le support 5, la platine 9 ou l'élément de structure du boîtier 1 peut être parfaitement positionné sur la portière ou l'élément de carrosserie et le miroir de rétroviseur proprement dit peut être réglé de manière habituelle.

La figure 5 des dessins annexés représente un autre mode de réalisation de l'invention, dans lequel le dispositif 11 de maintien du boîtier 1 sur le support 5 est constitué par un embout fileté prolongeant le tourillon 8, traversant un perçage correspondant du support 5 et coopérant avec un écrou de serrage 18. La liaison entre l'extrémité du tourillon 8 et la partie filetée formant le dispositif 11 est une liaison avec épaulement, cet épaulement s'appuyant sur le support 5 et le tourillon 8 est pourvu, en outre, d'un arrêt en rotation 19 coopérant avec un évidemment correspondant 20 dudit support 5.

Dans ce mode de réalisation, le tourillon 8 peut être serré sur le support 5 au moyen de l'écrou 18 et être maintenu en rotation grâce à l'arrêt 19, de sorte que la platine 9 ou l'élément de structure du boîtier 1 peut librement tourner autour du tourillon 1 avec possibilité d'indexation en position par l'intermédiaire du dispositif 12 qui est identique à celui décrit à propos du mode de réalisation suivant les figures 1 à 4.

Le cache-embase 2 est avantageusement monté par clippage sur le support 5 et l'élément de carrosserie ou la portière 3 et permet ainsi d'assurer la finition esthétique du montage du rétroviseur. Dans le cas du mode de réalisation suivant la figure 5, le cache-embase 2 est muni d'un obturateur 2' permettant d'accéder à l'écrou de serrage 19.

Grâce à l'invention, il est possible de réaliser un dispositif de fixation d'un rétroviseur extérieur sur un véhicule automobile de constitution simple et permettant un montage simple et rapide d'un ensemble ou d'un ensemble prémonté lors de l'assemblage final d'un véhicule automobile.

En effet, du fait que le support 5 est solidarisé avec un panneau de portière ou un élément de carrosserie ou fait partie intégrante de tels éléments, la constitution du rétroviseur est grandement simplifiée et son montage est plus aisé et plus rapide, de sorte que le coût de revient d'un tel rétroviseur, ainsi que de coût d'installation sont réduits par rapport aux rétroviseurs existants.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de fixation d'un rétroviseur extérieur, constitué par un boîtier (1) et par un cache-embase (2), sur un véhicule automobile **caractérisé en ce qu'**il se présente essentiellement sous forme d'un support (5) de boîtier de rétroviseur solidarisé avec ou intégré dans la matière formant une portière (3) ou un élément de carrosserie d'un véhicule automobile et d'un moyen (6) de montage pivotant du boîtier (1) sur ledit support (5).

2. Dispositif, suivant la revendication 1, **caractérisé en ce que** le support (5) est réalisé sous forme d'une pièce indépendante rapportée par soudage ou par collage ou sous forme d'une partie constitutive d'un panneau de portière (3) ou d'un élément de carrosserie et forme simultanément l'embase de fixation du rétroviseur sur une portière (3) ou un élément de carrosserie.

3. Dispositif, suivant l'une quelconque des revendications 1 et 2, **caractérisé en ce que** le support (5) de boîtier de rétroviseur, qui est solidarisé avec ou intégré dans une portière (3) ou un élément de carrosserie d'un véhicule automobile, est constitué sous forme d'une tôle emboutie en équerre, dont une aile (5') sert à la fixation sur une portière (3) ou un élément de carrosserie et dont l'autre aile (5") est munie d'un moyen (7) de réception, de maintien et de positionnement du moyen (6) de montage pivotant du boîtier (1) sur le support (5).

4. Dispositif suivant l'une quelconque des revendications 1 à 3, **caractérisé en ce que** la fixation du support (5) sur la portière (3) ou l'élément de carrosserie est réalisé par collage ou par soudage.

5. Dispositif suivant l'une quelconque des revendications 1 et 2, **caractérisé en ce que** le support (5) de boîtier de rétroviseur est réalisé en une matière synthétique rigide et est collé dans un panneau de portière ou sur un élément de carrosserie métallique ou encore est collé ou soudé sur un panneau de portière ou un élément de carrosserie également en matière synthétique.

6. Dispositif, suivant la revendication 1, **caractérisé en ce que** le support (5) est d'une seule pièce avec le panneau de portière (3) ou l'élément de carrosserie.

7. Dispositif, suivant la revendication 1, **caractérisé en ce que** le support (5) est recouvert par une partie du panneau de portière (3) ou de l'élément de carrosserie formant cache-embase (2) et le jeu fonctionnel entre le boîtier (1) et le cache-embase (2) est comblé par un élément intermédiaire de jointoiement, du type rondelle souple en élastomère, ou analogue.

8. Dispositif, suivant l'une quelconque des revendications 1 et 3, **caractérisé en ce que** le moyen (6) de montage pivotant du boîtier (1) sur le support (5) est constitué par un tourillon (8) d'accrochage et de maintien du boîtier (1) sur le support (5) par coopération avec le moyen (7) de réception, de maintien et de positionnement prévu sur le support (5), par un dispositif (11) de maintien du boîtier (1) sur le support (5) et par un dispositif (12) d'indexation en position du boîtier (1) sur le support (5), le tourillon (8) étant guidé axialement dans une platine (9) ou un élément de structure du boîtier (1) et chargé par un ressort de compression (10) s'appuyant contre un épaulement intérieur (9') de la platine (9) et contre un épaulement (8') du tourillon (8).

9. Dispositif, suivant la revendication 8, **caractérisé en ce que** le dispositif (11) de maintien du boîtier (1) sur le support (5) est constitué par un ergot en saillie sur la périphérie de la partie du tourillon (8) opposée à l'épaulement (8') de ce dernier et coopérant avec un logement de blocage (13) formant le moyen (7) de réception, de maintien et de positionnement prévu sur le support (5), ce moyen (7) comportant, en outre, au moins une ouverture (14) de passage de l'ergot formant le dispositif de maintien (11).

10. Dispositif, suivant la revendication 8, **caractérisé en ce que** le tourillon (8) peut être pourvu d'un élément complémentaire (15) de précontrainte du ressort de compression (10) et de présentation de l'ensemble tourillon (8) et platine (9) ou élément de structure du boîtier (1) en position d'engagement sur le support (5), cet élément complémentaire (15) étant sous forme d'une dent ou analogue coopérant avec un arrêt (16) prévu sur la platine (9) ou la structure du boîtier (1).

11. Dispositif, suivant la revendication 8, **caractérisé en ce que** le dispositif (12) d'indexation en position du boîtier (1) sur le support (5) se présente sous forme d'une série de crans en saillie sur la platine (9) ou élément de structure du boîtier (1), s'étendant à intervalles réguliers autour de la base du tourillon (8) et coopérant avec des crans correspondants (17) prévus sur le support (5).

12. Dispositif, suivant la revendication 8, **caractérisé en ce que** le dispositif (11) de maintien du boîtier (1) sur le support (5) est constitué par un embout fileté prolongeant le tourillon (8), traversant un perçage correspondant du support (5) et coopérant avec un écrou de serrage (18).

13. Dispositif, suivant la revendication 12, **caractérisé en ce que** la liaison entre l'extrémité du tourillon (8) et la partie filetée formant le dispositif (11) est une liaison avec épaulement, cet épaulement s'appuyant sur le support (5) et le tourillon (8) est pourvu, en outre, d'un arrêt en rotation (19) coopérant avec un évidemment correspondant (20) dudit support (5).

14. Dispositif, suivant la revendication 1, **caractérisé en ce que** le cache-embase (2) est monté par clippage sur le support (5).

15. Dispositif, suivant la revendication 14, **caractérisé en ce que** le cache-embase (2) est muni d'un obturateur (2').
